# EUROPEAN PATENT SPECIFICATION

(11) **EP 4 197 660 B1**
(45) Date of publication and mention of the grant of the patent: **11.09.2024**
(21) Application number: 22213512.1
(22) Date of filing: 14.12.2022
(51) Int. Cl.: B09B 1/00

(54) **SYSTEM FOR AUTOMATICALLY ADJUSTING THE GAS TAKEN UP FROM WELLS**
SYSTEM ZUR AUTOMATISCHEN ANPASSUNG DES AUS BOHRLÖCHERN ENTNOMMENEN GASES
SYSTÈME DE RÉGLAGE AUTOMATIQUE DU GAZ ASPIRÉ DE PUITS

(30) Priority: 15.12.2021 IT 202100031454
(43) Date of publication of application: 21.06.2023
(73) Proprietor: Ecospray Technologies S.r.l., 27058 Voghera (IT)
(72) Inventor: ARCHETTI, Maurizio, 6653 Terre di Pedemonte - Verscio (CH)
(74) Representative: Giraldi, Elisa

(56) References cited:
- WO-A1-2017/081671

## Description

### TECHNICAL FIELD OF THE INVENTION

The technical field of the present invention is the one of biogas collection and treatment. In particular, the present invention relates to a system for automatically adjusting the gas taken up from wells.

### BACKGROUND ART

A biogas plant is classified according to the operating purposes (environmental clean-up or energy recovery) or according to the management methods (manual control or automatic control). The main elements forming a system for automatically adjusting the gas taken up from wells are:
the uptake wells;
the transport network;
the adjusting stations;
the extraction and control station;
the combustion system;
the usage system.

The adjusting stations include the well line terminals, the condensate separators, the shutoff valves, the adjusting valves, and the gas sampling system.

The control system allows centralizing the management of the plant operating functions. The usage system allows energy recovery and electrical energy production. Adjusting the plant allows extracting a gaseous mixture while adjusting the percentage of oxygen and/or the stable and elevated methane value and/or the quantity of biogas extracted corresponding to the production curve, according to needs and/or circumstances.

As known in the background art, the uptake plants of the biogas produced by waste degradation comprise:
vertical extraction wells;
horizontal waste uptake systems and perimeter systems;
secondary connecting lines of the uptake wells;
connecting stations between main and secondary manifolds;
main manifolds;
condensate dischargers positioned on the transport lines;
an extraction and control station from which the biogas is sent to the energy recovery or the flare.

The biogas production mechanisms relate to generating compounds in gaseous phase, through vaporization, biological breakdown and physical/chemical reactions.

The main factors affecting the quantity and quality of the emissions are the type of waste and the landfill conditions (in which the waste is contained) in terms of temperature and years of cultivation. The production of biogas generally is estimated by means of a known software product such as GasSim2.5, which is the most well-known in the background art. In order to estimate the intake flow rate of the biogas, the intake flow rate of each biogas well, and of the whole landfill overall, needs to be determined. For the uptake of the biogas, a system for this function comprises the following elements:
an uptake system which can be positioned in the landfill body;
an uptake network to be sized as a function of the biogas production; where the wells are distributed so as to cover the entire volume of the landfill (the uptake wells usually are distributed in vertical manner).

The transport network consists of items and pipes connecting the landfill uptake points to the intake control station. The automatic adjustment of the extraction parameters aims to recover energy, where the percentage of methane is essential for the automatic adjustment, and therefore, where it becomes necessary to analyze the components of methane, oxygen and carbon dioxide contained in the gas.

A system of this type is known, for example, from WO 2017/081671 A1.

The uptake systems according to the background art have the problem - dealt with and overcome by the present invention - of modulating one or more valves in order to ensure the flow rate and quality required.

### BRIEF DESCRIPTION OF THE PRESENT INVENTION

The solution proposed according to the present invention is based on the analysis of the oxygen content from the biogas streams extracted from landfill wells and on continuously analyzing the content of the stream formed by mixing the various streams. The opening of the valves located along the respective intake lines from the wells is modulated based on the oxygen content so that the oxygen content of the mixed stream is less than the predetermined limit value.

The control station adjusts the opening of the valve involved by the stream and positioned along the respective well intake line in order to vary and modulate the flow rate intake based on the oxygen content for the single stream. Thereby, if the oxygen value is less than the desired limit, the valve opening is increased so as to increase the gas intake flow.

According to an embodiment, the system for automatically adjusting the gas uptake from wells of the present invention comprises:
an oxygen sensor for cyclical reading (AT05);
an oxygen sensor of the mixed stream (AT06);
a control valve on each well line (VA-XXX);
a control panel;
a differential pressure transmitter for each line, with orifice calibrated to measure the flow rate.

According to an embodiment, a well control station cyclically analyzes the oxygen content of the biogas streams extracted from the landfill wells and continuously analyzes the oxygen content of the stream obtained by mixing the various streams.

According to an embodiment, the control station manages the modulation of the valves to ensure the flow rate required by monitoring the oxygen value in the biogas mixture at a predetermined value. Based on the oxygen content detected for the single stream, the adjustment system adjusts the opening of one or more valves positioned along the respective well intake lines in order to modulate the flow rate intake; thereby, if the oxygen value were less than the desired limit, the opening of one or more valves is increased so as to increase the gas intake flow from the well; vice versa, the opening of one or more of the valves is reduced if the oxygen value is greater than the predetermined limit. The valves operate according to the modulating set point based on the deviation of the value measured for the N-th well from the average of the wells.

The object of the system is to allow keeping a set point for the oxygen concentration by correcting the single intake lines of the collected wells; according to an embodiment, the system can be accompanied by a system for measuring the flow rate by means of a calibrated orifice and differential pressure transmitter. Simultaneously, according to an embodiment, the system can also analyze the oxygen content of the main stream obtained by mixing streams from various wells, and make corrections by increasing or limiting the intake of the single lines: if the oxygen content of the main stream is less than the desired limit, the opening of all the valves located along the intake lines is increased; vice versa, the opening of the valves is reduced if the oxygen value is greater than the limit.

This last control can also communicate with a blower controlled by adjusting the number of revolutions to perform a suitable control of the gas intake.

### DESCRIPTION OF THE DRAWINGS

Further features and advantages of the invention will become more apparent from the non-exclusive description of the embodiments of the present invention shown in the drawings, in which:

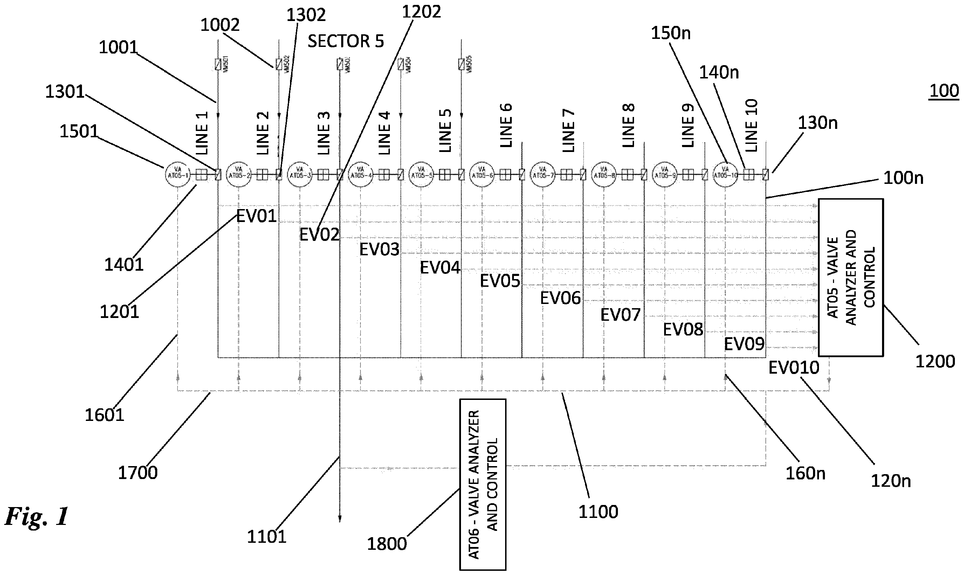

Figure 1 shows an example of a well diagram layout according to an embodiment of the present invention;

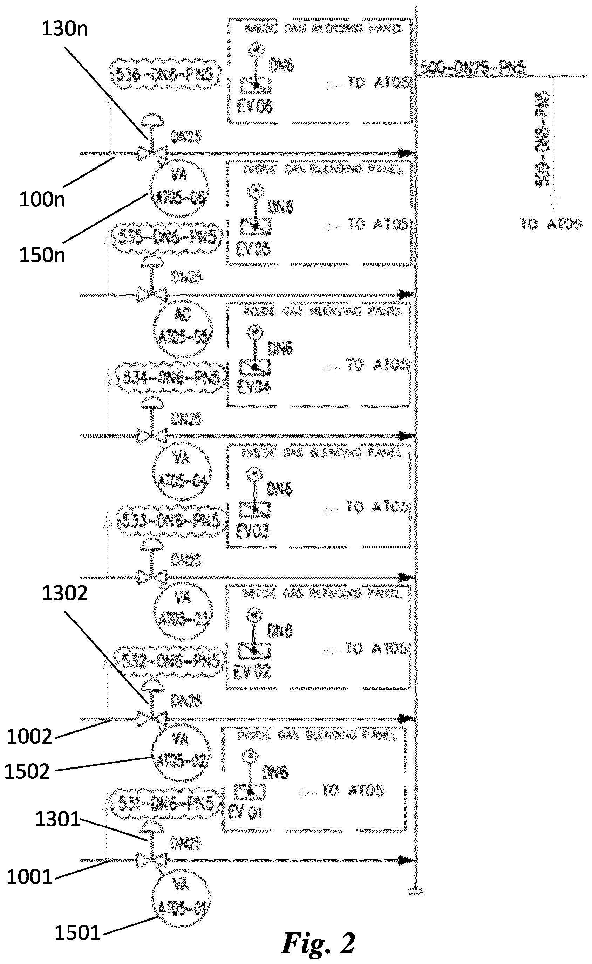

Figure 2 shows a detail A of the layout in Figure 1.

### DETAILED DESCRIPTION OF THE SYSTEM ACCORDING TO THE PRESENT INVENTION

In the drawings, the system according to an embodiment of the invention therein depicted is identified by the reference numeral 100 and comprises a plurality of intake lines (pipes) 1001, 1002, ..., 100n, each extending between a respective well (not shown in detail) and a manifold 1100, where the gas extracted (exiting) each well is introduced into manifold 1100 by means of lines or pipes 1001, 1002, ..., 100n, the gas lastly being sent from manifold 1100 to a plant (not depicted) by means of a further pipe.

Moreover, reference numeral 1200 identifies a sensor in connection with each of the pipes 1001, 1002, ..., 100n by means of respective tapping pipes 1201, 1202, ..., 120n by means of which part of the gas transiting in the pipes 1001, 1002, ..., 100n is sent to sensor 1200, said sensor 1200 being adapted to measure the percentage of oxygen O₂ transiting in each pipe 1001, 1002, ..., 100n.

Each pipe 1001, 1002, ..., 100n is further equipped with a respective valve 1301, 1302, ..., 130n, where the degree of opening of each valve 1301, 1302, ..., 130n determines the quantity of gas transiting in the respective pipe 1001, 1002, ..., 100n, where the opening and closing of the valves 1301, 1302, ..., 130n is obtained by means of respective actuators 1401, 1402, ..., 140n in turn controlled by respective logics 1501, 1502, ..., 150n, each of which is electrically fed by means of a secondary electric line 1601, 1602, ..., 160n, the secondary lines 1601, 1602, ..., 1600n being connected by a main electric line 1700 connected to a main logic for managing sensor 1200.

The gas mixture coming from the single wells along the respective pipes 1001, 1002, ..., 100n; said mixture transiting in the discharge pipe (towards a plant, not depicted) 1101 is monitored by means of an analyzer 1800.

The system (also possibly referred to as "control station") is conceived to ensure the percentage of oxygen O₂ in the gas mixture transiting in the discharge pipe 1101 never exceeds a predefined limit value, referred to as the "DESIGN SET POINT", where the operating modes of system 100 can be summarized as follows.

The system is conceived to cyclically analyze (by means of sensor 1200) the oxygen content of the biogas streams extracted from landfill wells and therefore, transiting in the pipes 1001, 1002, ..., 100n, and continuously analyze (by means of the analyzer or sensor 1800) the oxygen content of the stream transiting in the discharge pipe 1101 (obtained by mixing the various streams transiting in the pipes 1001, 1002, ..., 100n). As mentioned, for this purpose, part of the gas transiting in the pipes 1001, 1002, ..., 100n is tapped and sent to sensor 1200, which measures the percentage of oxygen O₂ thereof. Similarly, part of the mixture transiting in the discharge pipe 1101 is tapped and sent to sensor 1800,which measures the percentage of oxygen O₂ thereof. Based on the oxygen content (percentage) of the gas mixture in pipe 1101, the opening of one or more of the valves 1301, 1302, ..., 130n located along the respective intake lines 1001, 1002, ..., 100n from the wells is modulated so that the oxygen content of the mixed stream transiting in pipe 1001 is less than said predetermined limit value (DESIGN SET POINT).

Analyzer (sensor) 1200 analyzes each supply pipe separately by opening the respective dedicated valve 1301, 13012, ..., 130n, where based on the oxygen content read for the single stream or pipe 1001, 1002, ..., 100n, the system adjusts the opening of the respective valve 1301, 1302, ..., 130n, thereby varying the flow rate intake; if the oxygen value is less than the desired limit, the opening of valve 1301, 1302, ..., 130n is increased so as to increase the gas intake flow from the respective well; vice versa, the opening of the valve is reduced if the oxygen value is greater than the limit.

The valves operate according to a modulating set point based on the deviation of the value measured for the N-th well from the expected set point value. (Δ AT-XX)
The steps of increasing/decreasing the opening of the single valves 1301, 1302, ..., 130n are in the range 0-15% according to the deviation (Δ AT-XX = 130n(XX) - DESIGN SET POINT), as described in the following example, where 130n(XX) is the percentage of oxygen read by sensor 1200 for the single valve 130n.

### EXAMPLE OF VARYING OPENING LOGIC OF VALVE 130N

If 130n(XX) ≤ than set point *"%O2 design"* -> the valve 130n opens according to the table

| RANGE | Varying opening of valves |
|---|---|
| Δ AT-XX < LLL | Y1 |
| LLL < Δ AT-XX < LL | Y2 |
| LL < Δ AT-XX < L | Y3 |
| L < Δ AT-XX < 0 | Y4 |

If 130n(XX) > than set point "*% O2 design*" AND
value read by 1800 < than set point "*% O2 design*" -> the valve 130n opens by Y5

If the value read by 1800 ≥ than set point *"% O2 design"* -> the valve 130n closes according to the percentage values in the table below

| RANGE | Varying closing of valves |
|---|---|
| 0 < Δ AT-XX < H | Y6 |
| H < Δ AT-XX < HH | Y7 |
| HH < Δ AT-XX < HHH | Y8 |
| Δ AT-XX > HHH | Y9 |

System 100 is therefore capable of keeping a set point for the oxygen concentration by correcting the single intake lines 1001, 1002, ..., 100n from the collected wells.

According to an embodiment, system 100 can be accompanied by a system (not depicted) for measuring the flow rate by means of a calibrated orifice and differential pressure transmitter.

As shown, system 100 also analyzes the oxygen content of the main stream (%O₂ manifold 1101 towards utility) obtained by mixing streams from the various wells and makes corrections by increasing or limiting the intake from the single lines 1001, 1002, ..., 100n. In particular, if the oxygen content of the main stream (in manifold 1100 and/or in the discharge pipe 1101) is less than the desired limit (DESIGN SET POINT), the opening of one or more of the valves 1301, 1302, ..., 130n located along the intake lines 1001, 1002, ..., 100n, respectively, is increased; vice versa, the opening of the valves 1301, 1302, ..., 130n is reduced if the oxygen value is greater than the limit.

This last control can also communicate with a blower controlled by adjusting the number of revolutions to perform a suitable control of the gas intake.

System 100 is modular and each module can collect and monitor up to 20 lines 1001, 1002, ..., 1020.

It has therefore been shown, by means of the following description of the embodiments according to the present invention depicted in the drawings, that the system according to the invention allows the desired results to be achieved and the drawbacks found in the systems according to the prior art to be overcome.

Although the system according to the present invention was clarified by means of the following description of the embodiments depicted in the drawings, the system according to the invention is not limited to the embodiments described and shown in the drawings. Contrarily, all those variants of the embodiments described and depicted in the drawings which are obvious to skilled experts in the field fall within the objects of the present invention.

The object of the present invention is thus defined by the claims.

## Claims

1. A system (100) for automatically adjusting the percentage of oxygen in the gas taken up from wells, said system comprising:
a plurality of pipes (1001, 1002, ..., 100n), each adapted to be connected to a respective well so as to take up gas from said respective well; a connecting manifold (1100) to which said pipes (1001, 1002, ..., 100n) lead; wherein said system comprises first means for individually measuring the percentage of oxygen O₂ in the gas transiting in each of said pipes (1001, 1002, ..., 100n), **characterized in that** said system comprises second means for measuring the percentage of oxygen O₂ in the gas mixture exiting from said connecting manifold (1100), means for individually adjusting the gas flow in each of said pipes (1001, 1002, ..., 100n) as a function of the percentages of oxygen measured by said first measuring means and/or second measuring means, **further characterized in that** said system comprises a discharge pipe (1101) in connection with said connecting manifold (1100) and adapted to discharge the gas mixture transiting in said connecting manifold 1100 toward a plant or similar utility, and **characterized in that** said second means for measuring the percentage of oxygen O₂ in the gas mixture exiting from said connecting manifold (1100) comprise a second oxygen sensor (1800) and **in that** said system (100) comprises a deviation pipe adapted to deviate part of the gas mixture transiting in said discharge pipe (1101) into said second oxygen sensor.

2. The system (100) according to claim 1, **characterized in that** said first means for individually measuring the percentage of oxygen O₂ in the gas transiting in each of said pipes (1001, 1002, ..., 100n) comprise a first oxygen sensor (1200) and a plurality of tapping pipes (1201, 1202, ..., 120n), each adapted to deviate a part of the gas transiting in a respective pipe (1001, 1002, ..., 100n) into said sensor (1200).

3. The system (100) according to one of claims 1 or 2, **characterized in that** said means for individually adjusting the gas flow in each of said pipes (1001, 1002, ..., 100n) as a function of the percentages of oxygen measured by said first measuring means and/or second measuring means comprise a plurality of valves (1301, 1302, ..., 130n), each arranged along a respective pipe (1001, 1002, ..., 100n) so as to be crossed by the gas transiting in said respective pipe (1001, 1002, ..., 100n), and **in that** the opening of each of said valves (1301, 1302, ..., 130n) can be increased and alternately reduced by increasing or reducing the gas flow transiting in said respective pipe (1001, 1002, ..., 100n) as a function of the percentages of oxygen measured by said first measuring means and/or second measuring means.

4. The system (100) according to claim 3, **characterized in that** said system comprises a plurality of actuators (1401, 1402, ..., 140n), each dedicated to a respective valve (1301, 1302, ..., 130n) and adapted to increase and alternately reduce the opening of said respective valve (1301, 1302, ..., 130n) as a function of the percentages of oxygen measured by said first measuring means and/or second measuring means.

5. The system (100) according to claim 4, **characterized in that** said system comprises a plurality of electric logics (1501, 1502, ..., 150n), each in electrical connection with said first sensor (1200) and enslaved to a respective actuator (1401, 1402, ..., 140n) so as to actuate said respective actuator (1401, 1402, ..., 140n) so as to increase and alternately reduce the opening of said respective valve (1301, 1302, ..., 130n).

6. The system (100) according to claim 5, **characterized in that** it comprises a plurality of electric lines (1601, 1602, ..., 160n), each connected to a respective electric logic (1501, 1502, ..., 150n) and to an electric connecting line (1700), **and in that** said electric connecting line is connected to an electric control managed by said first oxygen sensor (1200).

7. The system according to one of claims 2 to 6, **characterized in that** said system (100) comprises a second plurality of tapping valves (EV01, EV02, ..., EV0n), each arranged along a respective tapping pipe (1201, 1202, ..., 120n) so as to be crossed by the gas transiting in said respective tapping pipe (1201, 1202, ..., 120n) so as to inhibit and alternately allow the gas flow in said respective tapping pipe (1201, 1202, 120n).

8. The system according to claim 7, **characterized in that** each of said tapping valves (EV01, EV02, ..., EV0n) is an ON/OFF type valve.

## Patentansprüche

1. System (100) zum automatischen Einstellen des Prozentsatzes von Sauerstoff in dem Gas, das aus Bohrlöchern aufgenommen wird, wobei das System umfasst:
eine Vielzahl von Rohren (1001, 1002, ..., 100n), die jeweils dafür ausgelegt sind, mit einem jeweiligen Bohrloch verbunden zu werden, um Gas aus dem jeweiligen Bohrloch aufzunehmen;
einen Verbindungsverteiler (1100), zu dem die Rohre (1001, 1002, ..., 100n) führen;
wobei das System ein erstes Mittel zum individuellen Messen des Prozentsatzes von Sauerstoff O₂ in dem Gas, das in jedem der Rohre (1001, 1002, ..., 100n) strömt, umfasst,
**dadurch gekennzeichnet, dass** das System ein zweites Mittel zum Messen des Prozentsatzes von Sauerstoff O₂ in dem Gasgemisch, das aus dem Verbindungsverteiler (1100) austritt, ein Mittel zum individuellen Einstellen des Gasstroms in jedem der Rohre {1001, 1002, ..., 100n) als eine Funktion der Prozentsätze von Sauerstoff, die durch das erste Messmittel und/oder das zweite Messmittel gemessen werden, umfasst,
ferner **dadurch gekennzeichnet, dass** das System ein Austragsrohr (1101) in Verbindung mit dem Verbindungsverteiler (1100) umfasst und dafür ausgelegt ist, das Gas -Gemisch, das in dem Verbindungsverteiler 1100 strömt, in Richtung einer Anlage oder einer ähnlichen Einrichtung auszutragen,
und **dadurch gekennzeichnet, dass** das zweite Mittel zum Messen des Prozentsatzes von Sauerstoff O₂ in dem Gasgemisch, das aus dem Verbindungsverteiler (1100) austritt, einen zweiten Sauerstoffsensor (1800) umfasst, und dadurch, dass das System (100) ein Umleitungsrohr umfasst, das dafür ausgelegt ist, einen Teil des Gasgemischs, das in dem Austragsrohr (1101) strömt, in den zweiten Sauerstoffsensor umzuleiten.

2. System (100) nach Anspruch 1, **dadurch gekennzeichnet, dass** das erste Mittel zum individuellen Messen des Prozentsatzes von Sauerstoff O₂ in dem Gas, das in jedem der Rohre {1001, 1002, ..., 100n) strömt, einen ersten Sauerstoffsensor (1200) und eine Vielzahl von Entnahmerohren (1201, 1202, ..., 120n) umfasst, die jeweils dafür ausgelegt sind, einen Teil des Gases, das in einem jeweiligen Rohr {1001, 1002, ..., 100n) strömt, in den Sensor (1200) umzuleiten.

3. System (100) nach einem der Ansprüche 1 oder 2, **dadurch gekennzeichnet, dass** das Mittel zum individuellen Einstellen des Gasstroms in jedem der Rohre (1001, 1002, ..., 100n) als eine Funktion der Prozentsätze von Sauerstoff, die durch das erste Messmittel und/oder das zweite Messmittel gemessen werden, eine Vielzahl von Ventilen (1301, 1302, ..., 130n) umfasst, die jeweils entlang eines jeweiligen Rohrs (1001, 1002, ..., 100n) angeordnet sind, so dass sie von dem Gas, das in dem jeweiligen Rohr (1001, 1002, ..., 100n) strömt, durchquert werden, und dadurch, dass die Öffnung jedes der Ventile (1301, 1302, ..., 130n) durch Erhöhen oder Verringern des Gasstroms, der in dem jeweiligen Rohr (1001, 1002, ..., 100n) strömt, als eine Funktion der Prozentsätze von Sauerstoff, die durch das erste Messmittel und/oder das zweite Messmittel gemessen werden, erhöht oder alternativ verringert werden kann.

4. System (100) nach Anspruch 3, **dadurch gekennzeichnet, dass** das System eine Vielzahl von Aktoren (1401, 1402, ..., 140n) umfasst, die jeweils einem jeweiligen Ventil (1301, 1302, ..., 130n) zugeordnet sind und dafür ausgelegt sind, die Öffnung des jeweiligen Ventils (1301, 1302, ..., 130n) als eine Funktion der Prozentsätze von Sauerstoff, die durch das erste Messmittel und/oder das zweite Messmittel gemessen werden, zu erhöhen oder alternativ zu verringern.

5. System (100) nach Anspruch 4, **dadurch gekennzeichnet, dass** das System eine Vielzahl von elektrischen Logiken (1501, 1502, ..., 150n) umfasst, die jeweils mit dem ersten Sensor (1200) elektrisch verbunden sind und einem jeweiligen Aktor (1401, 1402, ..., 140n) untergeordnet sind, um den jeweiligen Aktor (1401, 1402, ..., 140n) zu betätigen, um die Öffnung des jeweiligen Ventils (1301, 1302, ..., 130n) zu erhöhen oder alternativ zu verringern.

6. System (100) nach Anspruch 5, **dadurch gekennzeichnet, dass** es eine Vielzahl von elektrischen Leitungen (1601, 1602, ..., 160n) umfasst, die jeweils mit einer jeweiligen elektrischen Logik (1501, 1502, ..., 150n) und mit einer elektrischen Verbindungsleitung (1700) verbunden sind, und dass die elektrische Verbindungsleitung mit einer elektrischen Steuerung verbunden ist, die durch den ersten Sauerstoffsensor (1200) gesteuert wird.

7. System nach einem der Ansprüche 2 bis 6, **dadurch gekennzeichnet, dass** das System (100) eine Vielzahl von zweiten Entnahmeventilen (EV01, EV02, ..., EV0n) umfasst, die jeweils entlang eines jeweiligen Entnahmerohrs (1201, 1202, ..., 120n) angeordnet sind, so dass sie von dem Gas, das in dem jeweiligen Entnahmerohr (1201, 1202, ..., 120n) strömt, durchquert werden, um den Gasstrom in dem jeweiligen Entnahmerohr (1201, 1202, 120n) zu hemmen oder alternativ zuzulassen.

8. System nach Anspruch 7, **dadurch gekennzeichnet, dass** jedes der Entnahmeventile (EV01, EV02, ..., EV0n) ein Ventil vom Typ EIN/AUS ist.

## Revendications

1. Système (100) pour ajuster automatiquement le pourcentage d'oxygène dans le gaz prélevé des puits, ledit système comprenant :
une pluralité de conduits (1001, 1002, ..., 100n), chacun adapté pour être raccordé à un puits respectif de manière à prélever du gaz dudit puits respectif ; un collecteur de raccordement (1100) auquel aboutissent lesdits conduits (1001, 1002, ..., 100n) ; dans lequel ledit système comprend des premiers moyens pour mesurer individuellement le pourcentage d'oxygène O₂ dans le gaz transitant dans chacun desdits conduits (1001, 1002, ..., 100n), **caractérisé en ce que** ledit système comprend des deuxièmes moyens pour mesurer le pourcentage d'oxygène O₂ dans le mélange gazeux sortant dudit collecteur de raccordement (1100), des moyens pour ajuster individuellement l'écoulement de gaz dans chacun desdits conduits (1001, 1002, ..., 100n) en fonction des pourcentages d'oxygène mesurés par lesdits premiers moyens de mesure et/ou deuxièmes moyens de mesure, en outre **caractérisé en ce que** ledit système comprend un conduit d'évacuation (1101) en liaison avec ledit collecteur de raccordement (1100) et adapté pour évacuer le mélange gazeux transitant dans ledit collecteur de raccordement 1100 vers une usine ou un service similaire, et **caractérisé en ce que** lesdits deuxièmes moyens pour mesurer le pourcentage d'oxygène O₂ dans le mélange gazeux sortant dudit collecteur de raccordement (1100) comprennent un deuxième capteur d'oxygène (1800) et **en ce que** ledit système (100) comprend un conduit de déviation adapté pour dévier une partie du mélange gazeux transitant dans ledit conduit d'évacuation (1101) dans ledit deuxième capteur d'oxygène.

2. Système (100) selon la revendication 1, **caractérisé en ce que** lesdits premiers moyens pour mesurer individuellement le pourcentage d'oxygène O₂ dans le gaz transitant dans chacun desdits conduits (1001, 1002, ..., 100n) comprennent un premier capteur d'oxygène (1200) et une pluralité de conduits de piquage (1201, 1202, ..., 120n), chacun étant adapté pour dévier une partie du gaz transitant dans un conduit respectif (1001, 1002, ..., 100n) dans ledit capteur (1200).

3. Système (100) selon l'une des revendications 1 ou 2, **caractérisé en ce que** lesdits moyens pour ajuster individuellement l'écoulement de gaz dans chacun desdits conduits (1001, 1002, ..., 100n) en fonction des pourcentages d'oxygène mesurés par lesdits premiers moyens de mesure et/ou deuxièmes moyens de mesure comprennent une pluralité de soupapes (1301, 1302,..., 130n), chacune disposée le long d'un conduit respectif (1001, 1002, ..., 100n) de manière à être traversée par le gaz transitant dans ledit conduit respectif (1001, 1002,..., 100n), et **en ce que** l'ouverture de chacune desdites soupapes (1301, 1302, ..., 130n) peut être augmentée et alternativement réduite en augmentant ou en réduisant l'écoulement de gaz transitant dans ledit conduit respectif (1001, 1002,..., 100n) en fonction des pourcentages d'oxygène mesurés par lesdits premiers moyens de mesure et/ou deuxièmes moyens de mesure.

4. Système (100) selon la revendication 3, **caractérisé en ce que** ledit système comprend une pluralité d'actionneurs (1401, 1402, ..., 140n), chacun dédié à une soupape respective (1301, 1302, ..., 130n) et adapté pour augmenter et réduire alternativement l'ouverture de ladite soupape respective (1301, 1302, ..., 130n) en fonction des pourcentages d'oxygène mesurés par lesdits premiers moyens de mesure et/ou deuxièmes moyens de mesure.

5. Système (100) selon la revendication 4, **caractérisé en ce que** ledit système comprend une pluralité de logiques électriques (1501, 1502, ..., 150n), chacune en liaison électrique avec ledit premier capteur (1200) et asservie à un actionneur respectif (1401, 1402, ..., 140n) de manière à actionner ledit actionneur respectif (1401, 1402, ..., 140n) de manière à augmenter et à réduire alternativement l'ouverture de ladite soupape respective (1301, 1302, ..., 130n).

6. Système (100) selon la revendication 5, **caractérisé en ce qu'**il comprend une pluralité de lignes électriques (1601, 1602, ..., 160n), chacune reliée à une logique électrique respective (1501, 1502, ..., 150n) et à une ligne de raccordement électrique (1700), et **en ce que** ladite ligne de raccordement électrique est reliée à une commande électrique gérée par ledit premier capteur d'oxygène (1200).

7. Système selon l'une des revendications 2 à 6, **caractérisé en ce que** ledit système (100) comprend une deuxième pluralité de soupapes de piquage (EV01, EV02, ..., EVOn), chacune disposée le long d'un conduit de piquage respectif (1201, 1202, ..., 120n) de manière à être traversée par le gaz transitant dans ledit conduit de piquage respectif (1201, 1202, ..., 120n) afin d'inhiber et de permettre alternativement l'écoulement de gaz dans ledit conduit de piquage respectif (1201, 1202, 120n).

8. Système selon la revendication 7, **caractérisé en ce que** chacune desdites soupapes de piquage (EV01, EV02, ..., EV0n) est une soupape de type MARCHE/ARRÊT.
